# EUROPEAN PATENT APPLICATION

(11) **EP 4 657 139 A1**
(43) Date of publication of application: **03.12.2025**
(21) Application number: 25179524.1
(22) Date of filing: 28.05.2025
(51) Int. Cl.: G02B 27/01, G06F 3/01, G06F 30/15, G06F 30/17, G06F 30/20, G09B 9/05, G06T 19/20

(54) **SYSTEM FOR THE INTERACTIVE PROTOTYPING OF PRODUCTS, CORRESPONDING OPERATION METHOD AND COMPUTER PROGRAM PRODUCT**

(30) Priority: 30.05.2024 IT 202400012409
(71) Applicant: Granstudio S.p.A., 10154 Torino (IT)
(72) Inventor: WARMUS, Klaudia, 10154 Torino (TO) (IT); CZEKANOWSKI, Lukasz, 10154 Torino (TO) (IT); VERMEERSCH, Lowie, 10154 Torino (TO) (IT)
(74) Representative: Buzzi, Notaro & Antonielli d'Oulx S.p.A.

(57) **Abstract**

A system (1) for the interactive prototyping of products includes a computer (40), a VR or AR headset (HS) wearable by a user, a master device (10) and a slave device (20). The computer runs a 2D design software program (PT) for designing a 2D screen interface that is intended to be incorporated into a product, runs a 3D graphics engine (GE) for producing a 3D model of the product, and incorporates the 2D screen interface into the 3D model of the product to produce a virtual representation of the product. The headset (HS) is coupled to the computer and displays the virtual representation of the product. The master device is coupled to the computer (40) via one or more serial communication interfaces (12a, 12b) to exchange data between the 2D design software program (PT), the 3D graphics engine (GE) and the master device (10) via a software plugin (PL1, PL2) run by the computer (40). The master device (10) includes a first wireless communication interface (14). The slave device (20) includes a second wireless communication interface (24) for exchanging data with the first wireless communication interface (14), and further includes an actuator (25) and/or a sensor (27, 28, 29). Actuation data is transmitted from the 2D design software program (PT) and/or the 3D graphics engine (GE) to the actuator (25) via the master device (10), and control data is transmitted from the sensor (27, 28, 29) to the 2D design software program (PT) and/or the 3D graphics engine (GE) via the master device (10).

## Description

### Field of the invention

The present description relates to systems and methods for the interactive prototyping of products.

In particular, such systems and methods may be used for the prototyping of the interior and/or exterior of a vehicle such as a car, but in principle they may be used for the prototyping of any type of product such as household appliances, industrial machines, and the like.

### Technological background

In the field of industrial design, the aim of prototyping is that of generating a prototype (e.g., a mock-up) of the desired product that closely mimics the appearance and/or functionality of the final product and reproduces a genuine user experience in the most accessible manner.

Conventionally, physical mock-up of products (e.g., the interior or exterior of a car) used to be built. However, the making of physical mock-ups is a lengthy and costly process. Therefore, prototyping with the help of virtual reality (VR) and/or augmented reality (AR) devices is becoming increasingly common. Such VR/AR prototyping tools may be used in combination with configurable physical mock-ups, as disclosed by documents EP 4222728 A1 and EP 4231191 A1 of the same Applicant, in order to provide an extended reality (XR) design system.

Moreover, modern products (e.g., cars) often have human-machine interfaces (HMIs) that include screens and/or touchscreens. Currently, various design programs are available for creating 2D interfaces (e.g., designing and testing the appearance and functionality of an in-vehicle screen or touchscreen), but they lack the ease of verifying how these interfaces may function in real-world scenarios. On the other hand, there are programs that allow 3D prototyping in VR and AR environments, but designing 2D interfaces within the framework of a 3D prototyping tool is often complex or outright impossible.

Therefore, there is a need in the art to provide improved systems and methods for the plug-and-play interactive prototyping of products, which facilitate the merging of 2D-designed screen interfaces, 3D-designed environments, and physical (hardware) components.

### Summary of the invention

An object of one or more embodiments of the present description is that of providing such improved prototyping systems.

According to one or more embodiments, such an object can be achieved by a prototyping system having the features set forth in the claims that follow.

One or more embodiments may relate to a corresponding prototyping method.

One or more embodiments may relate to a corresponding computer program product loadable in the memory of at least one processing unit (e.g., a MCU or CPU) and comprising software code portions for executing the steps of the method when the product is run on at least one processing unit. As used herein, reference to such a computer program product is understood as being equivalent to reference to a computer-readable medium containing instructions for controlling the processing unit in order to co-ordinate implementation of the method according to one or more embodiments. Reference to "at least one" processing unit is intended to highlight the possibility for one or more embodiments to be implemented in modular and/or distributed form.

The claims are an integral part of the technical teaching provided herein in respect of the embodiments.

According to an aspect of the present description, a system for the interactive prototyping of products includes a computer configured to run a 2D design software program for designing a bi-dimensional screen interface that is intended to be incorporated into a product, run a 3D graphics engine for producing a three-dimensional model of the product, and incorporate the bi-dimensional screen interface into the three-dimensional model of the product to produce a virtual representation of the product. The system includes a virtual reality or augmented reality headset coupled to the computer and wearable by a user, the headset being configured to display the virtual representation of the product. The system includes a master device coupled to the computer via one or more serial communication interfaces to exchange data between the 2D design software program, the 3D graphics engine and the master device via a software plugin run by the computer. The master device further includes a first wireless communication interface. The system includes at least one slave device including a second wireless communication interface for exchanging data with the first wireless communication interface. The at least one slave device further includes at least one actuator device and/or at least one sensor device. Actuation data is transmitted from the 2D design software program and/or the 3D graphics engine to the at least one actuator device via the master device. Control data is transmitted from the at least one sensor device to the 2D design software program and/or the 3D graphics engine via the master device.

One or more embodiments thus facilitate the seamless integration of virtual 2D HMI interfaces into 3D virtual models of products and their merging with a physical mock-up to improve the design verification phase.

According to another aspect of the present description, a method of operating a system for the interactive prototyping of products includes:
- designing, with a 2D design software program run by a computer, a bi-dimensional screen interface that is intended to be incorporated into a product;
- producing, with a 3D graphics engine run by the computer, a three-dimensional model of the product;
- incorporating the bi-dimensional screen interface into the three-dimensional model of the product to produce a virtual representation of the product;
- displaying the virtual representation of the product on a virtual reality or augmented reality headset coupled to the computer and wearable by a user;
- coupling the computer to a master device via one or more serial communication interfaces to exchange data between the 2D design software program, the 3D graphics engine and the master device via a software plugin run by the computer;
- exchanging data between the master device and at least one slave device via the first wireless communication interface of the master device and the second wireless communication interface of the slave device;
- transmitting actuation data from the 2D design software program and/or the 3D graphics engine to at least one actuator device of the slave device via the master device; and
- transmitting control data from at least one sensor device of the slave device to the 2D design software program and/or the 3D graphics engine via the master device.

### Brief description of the drawings

The invention will now be described in detail with reference to the attached drawings, provided purely by way of non-limiting example, wherein:
- Figure 1 is a circuit diagram exemplary of a master device for use in a prototyping system according to the invention;
- Figure 2 is a circuit diagram exemplary of a slave device for use in a prototyping system according to the invention;
- Figure 3 is a circuit diagram exemplary of another slave device for use in a prototyping system according to the invention; and
- Figure 4 is a block diagram exemplary of a prototyping system according to the invention.

### Detailed description of the invention

As anticipated, the present description discloses a system and a method that aim at seamlessly connecting three design environments that are conventionally separated, i.e., a 2D design environment (e.g., a software environment) for the design of a user interface (e.g., screens and touchscreens), a 3D design environment (e.g., a software environment) for the design of a 3D model of the shape and/or appearance of a product where the 2D user interface is intended to be incorporated (e.g., the interior of a vehicle, such as the dashboard area), which can be visualized using VR/AR tools, and a physical (hardware) prototype or mock-up that reproduces at least some of the shapes and/or physical devices of the 3D model. By doing so, the designers can effortlessly exploit a comprehensive and interactive prototyping environment that combines physical objects and digital (virtual) representations in a so-called "extended reality" (XR) prototyping system for the verification of designs.

Substantially, the design and verification process includes the design of a 2D screen interface (e.g., including screen layouts, transitions, animations, etc.) that is intended to be incorporated into a product, using a conventional 2D interface design program (e.g., ProtoPie). The design and verification process also includes the design of a 3D model of the product (e.g., including the shapes), using a conventional 3D design program (e.g., Unreal Engine). The product may include, in addition to the 2D screen interface, additional physical devices with which the user can interact (e.g., buttons, knobs, and the like) and/or physical devices that can affect the user experience (e.g., LED lights). By merging the 2D interface, the 3D model and the physical mock-up devices (e.g., using a virtual reality or augmented reality headset where the output of the 2D and 3D design environments are merged), the behavior of the 2D interface can be simulated together with the behavior of other devices, e.g., ambient light. For instance, during the verification of a design of a vehicle, the designer could interact with a virtual touchscreen that is reproduced by the VR/AR headset in the virtual 3D model of the vehicle's interior, superposed to the physical mock-up, to change some settings of the interior lighting. The interior lighting could then be modified accordingly in the simulated 3D model, so as to give a realistic feedback to the designer.

In a use case scenario, a design system according to the present description may be used in the automotive industry. A designer may carry out the verification of the design within an immersive 3D VR/AR/XR environment, sitting in the driver's seat of the virtual car interior. As the designer navigates the digital representation, he or she is able to test form and function at the same time, envisioning the interplay between the vehicle's hardware and the user experience (UX). While sitting in the 3D VR/AR/XR environment, the designer can seamlessly engage with the 2D HMI prototype dedicated to the infotainment system (e.g., a touchscreen on the center console). The digital representation mirrors the dashboard controls, touchscreens, and interactive elements that the driver and passengers will interact with. The 2D screen interface is incorporated in the virtual 3D environment, allowing comprehensive design verification. Additionally, the testing phase also relies on the use of real (physical) in-car controls, crafted as physical prototypes in the vehicle mock-up. These controls, provide a tangible feedback for the designer, facilitating realistic testing without the need for full production integration at this stage. The superposition of physical prototyping controls and the digital 3D environment including digital 2D interfaces offers a realistic simulation of the tactile feel and functionality of real in-car controls. This approach not only expedites the design iteration process but also allows to check that the HMI seamlessly integrates into the shapes of the vehicle.

In another use case scenario, a design system according to the present description may be used in the aerospace and aviation industry. Here, an HMI designer can step into a 3D simulated environment that reproduces a cockpit, interact with 2D avionic control panels, and test physical controls specific to aviation. The immersive 3D VR/AR/XR environment allows to verify that the HMI design meets the stringent requirements of aviation, while providing a realistic interaction between virtual and physical elements. This testing includes the use of physical prototypes, allowing for realistic evaluations without the need for full production integration at this stage.

In another use case scenario, a design system according to the present description may be used for the design of home automation and IoT devices. The designer working on smart home devices can connect real IoT devices to the prototype. This allows for testing the integration of physical devices with digital interfaces, ensuring a seamless user experience as users interact with both the app and the tangible hardware.

In another use case scenario, a design system according to the present description may be used for the design of medical devices and healthcare systems. The HMI designer could navigate through an immersive 3D VR/AR/XR representation of a state-of-the-art medical facility. In the virtual space, the designer can seamlessly make use of 2D HMI prototypes, testing the usability of 2D interfaces for various medical equipment, which mirror the actual interfaces that healthcare professionals will interact with in real-world scenarios. In this case as well, the inclusion of physical prototyping controls, even if not production-ready, allows for a nuanced evaluation of how the HMI design aligns with the tactile and operational expectations of healthcare practitioners. The immersive 3D VR/AR/XR environment allows to verify that the HMI design meets the stringent usability standards expected in healthcare settings and integrates seamlessly with the physical tools utilized by medical professionals. The inclusion of physical controls improvs the realism of the testing phase.

Therefore, the system and method described herein can be used for the design of any industrial product, from transportation means to appliances, machines, healthcare devices, and the like. For the sake of ease of explanation, in the following reference will be made mainly to the field of automotive design, and in particular to the design of interiors of cars.

The prototyping system according to the instant invention relies on a hardware platform that operates as a bridge connecting the 3D environment, crafted within the framework of an industry-standard graphics engine (or rendering engine, 3D engine, gaming engine), and complex 2D HMI prototypes (e.g., screen layouts and functionality), crafted within the framework of an industry-standard 2D HMI prototyping tool. Designers can thus leverage the advantages of both software environments (3D and 2D) without encountering compatibility issues or constraints. The bridge functionality of the hardware platform is provided by a bidirectional communication channel established between the 3D graphics engine and the 2D prototyping tool. Additionally, the hardware platform allows to connect the mixed 3D/2D environment with real-world hardware components (e.g., to superpose the representation of the 3D/2D digital environment to the physical hardware mock-up using an augmented reality headset). Designers can thereby test the integration of physical controls and devices within the prototyped environment. The physical control and devices include, but are not limited to, buttons, switches, knobs, levers, and other tangible interfaces. The physical controls may be prototyping controls (i.e., not intended for full production), providing anyway a realistic assessment of the user experience. By relying on the merge of physical prototyping controls within the digital 3D/2D AR environment, designers can rely on an iterative design process without the need for full production integration at each stage. This feature is particularly advantageous, insofar as it offers a practical approach to refine designs based on real-world interactions, and it accelerates the design iteration process while ensuring that the hardware and software components harmonize seamlessly.

The prototyping system according to the instant invention includes a main PCB or main device, that operates as a master device, and one or more secondary PCBs or secondary devices, that operate as slave devices.

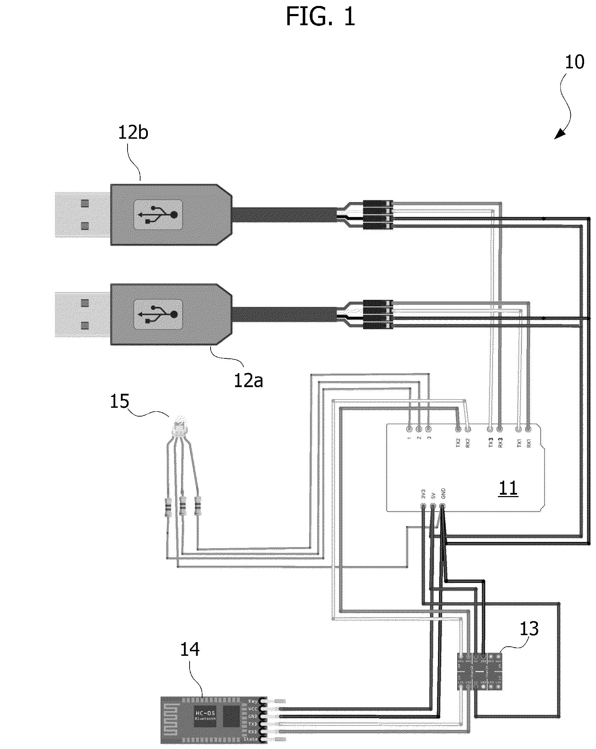

Figure 1 is a circuit diagram exemplary of a possible architecture of the master device 10. The master device 10 includes a PCB 11 that is coupled to a first serial communication module 12a (e.g., a USB module), a second serial communication module 12b (e.g., a USB module), a level shifter circuit 13, a wireless communication module 14 (e.g., a Bluetooth module), and a status LED 15. The first serial communication module 12a is coupled to a first communication channel of the PCB 11 (e.g., a transmit pin TX1 and a receive pin RX1 of the PCB 11), and is also coupled to supply pins GND (i.e., ground) and 5V (i.e., providing a 5 V supply voltage) of the PCB 11 to be supplied thereby. The second serial communication module 12b is coupled to a third communication channel of the PCB 11 (e.g., a transmit pin TX3 and a receive pin RX3 of the PCB 11), and is also coupled to supply pins GND and 5V of the PCB 11 to be supplied thereby. The level shifter circuit 13 has a high-voltage (e.g., 5 V) communication channel coupled to a second communication channel of the PCB 11 (e.g., a transmit pin TX2 and a receive pin RX2 of the PCB 11), and a low-voltage (e.g., 3.3 V) communication channel coupled to the communication channel of the Bluetooth module 14 (e.g., a transmit pin TXD and a receive pin RXD of the Bluetooth module 14). The level shifter circuit 13 is also coupled to supply pins GND, 5V and 3V3 of the PCB 11 (the latter providing a 3.3 V supply voltage) to be supplied thereby, and is configured to shift and pass signals between the Bluetooth module 14 and the PCB 11 (i.e., between the second communication channel of the PCB 11 operating at 5 V and the communication channel of the Bluetooth module 14 operating at 3.3 V). The Bluetooth module 14 is also coupled to supply pins GND and 3V3 of the PCB 11 to be supplied thereby. The status LED 15 may be, for instance, an RGB LED having a cathode terminal coupled to the supply pin GND of the PCB 11, and three anode terminals (one for each LED) coupled to respective control terminal of the PCB 11 (e.g., numbered 1, 2, 3), possibly via (discrete) resistors. The status LED 15 may provide visual feedback on the current status of the system, enhancing user interaction and troubleshooting capabilities.

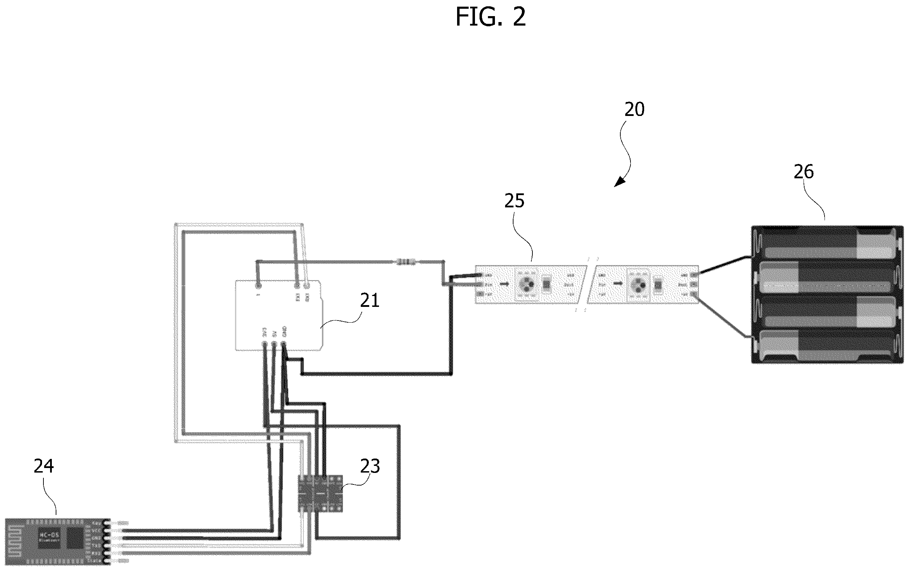

Figure 2 is a circuit diagram exemplary of a possible architecture of a slave device 20. The slave device 20 includes a PCB 21 that is coupled to a level shifter circuit 23, a wireless communication module 24 (e.g., a Bluetooth module), and a LED strip 25. The level shifter circuit 23 has a high-voltage (e.g., 5 V) communication channel coupled to a communication channel of the PCB 21 (e.g., a transmit pin TX1 and a receive pin RX1 of the PCB 21), and a low-voltage (e.g., 3.3 V) communication channel coupled to the communication channel of the Bluetooth module 24 (e.g., a transmit pin TXD and a receive pin RXD of the Bluetooth module 24). The level shifter circuit 23 is also coupled to supply pins GND, 5V and 3V3 of the PCB 11 (which respectively provide a ground voltage , a 5 V supply voltage, and a 3.3 V supply voltage) to be supplied thereby, and is configured to shift and pass signals between the Bluetooth module 24 and the PCB 21 (i.e., between the communication channel of the PCB 21 operating at 5 V and the communication channel of the Bluetooth module 24 operating at 3.3 V). The Bluetooth module 24 is also coupled to supply pins GND and 3V3 of the PCB 21 to be supplied thereby. The LED strip 25 has a ground terminal coupled to the supply pin GND of the PCB 11, and a control terminal coupled to a respective control terminal of the PCB 21 (e.g., numbered 1), possibly via a (discrete) resistor. Furthermore, the LED strip 25 has a supply terminal coupled to the positive terminal of a battery 26 or battery pack (e.g., a 5 V battery, possibly including one or more AAA batteries or a 5 V power bank), and the ground terminal of the LED strip 25 is also coupled to the ground terminal of battery 26. By incorporating a power source, the slave configuration ensures portability and autonomy, allowing the LED strip to function independently from the availability of external power sources.

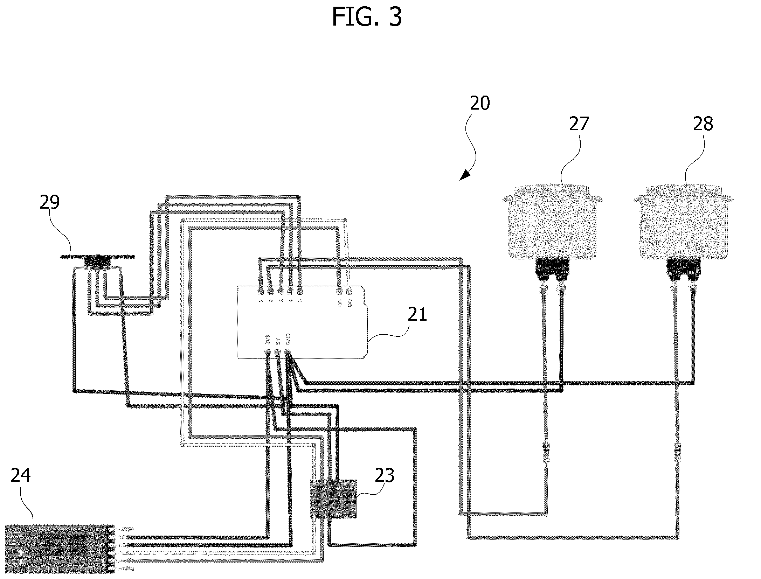

Figure 3 is a circuit diagram exemplary of another possible architecture of a slave device 20. The slave device 20 includes a PCB 21 that is coupled to a level shifter circuit 23, a wireless communication module 24 (e.g., a Bluetooth module), a first button 27, a second button 28 and a rotary encoder 29. The level shifter circuit 23 and the Bluetooth module 24 are coupled to the PCB 21 and amongst themselves as previously described with reference to Figure 2. The button 27 has a ground terminal coupled to the supply pin GND of the PCB 21, and a positive terminal coupled to a respective sense terminal of the PCB 21 (e.g., numbered 1), possibly via a (discrete) resistor. Similarly, the button 28 has a ground terminal coupled to the supply pin GND of the PCB 21, and a positive terminal coupled to a respective sense terminal of the PCB 21 (e.g., numbered 2), possibly via a (discrete) resistor. The rotary encoder 29 has a ground terminal coupled to the supply pin GND of the PCB 21, a positive terminal coupled to the supply pin 5V of the PCB 21, and detection terminals coupled to respective three sense terminals of the PCB 21 (e.g., numbered 3, 4, 5).

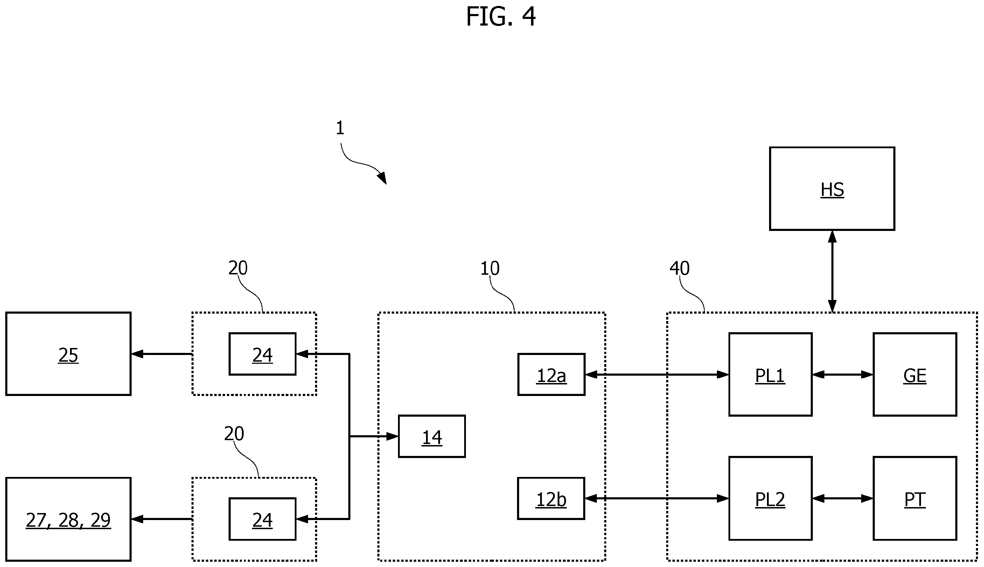

From a functional and operative standpoint, the prototyping system according to the instant invention can be described with reference to the block diagram of Figure 4, which exemplifies the data connections between various components of the system. The prototyping system 1 includes a master device 10 and one or more slave devices 20 coupled to respective hardware devices 25, 27, 28, 29 (e.g., as exemplified in Figures 2 and 3). The master device 10 and slave devices 20 use their wireless communication modules 14, 24 (e.g., Bluetooth modules) to exchange data amongst themselves. The master device 10 uses its first serial communication module 12a (e.g., USB module) to exchange data with a computer 40 and open a first communication port (COM port) to communicate with the graphics engine GE. The master device 10 uses its second serial communication module 12b (e.g., USB module) to exchange data with the computer 40 and open a second communication port (COM port) to communicate with the prototyping tool PT. During operation, the computer 40 runs both the graphics engine GE (e.g., an industry-standard gaming engine) and the 2D HMI prototyping tool PT (e.g., an industry-standard 2D prototyping software). The graphics engine GE communicates with the master device 10 via a first software plugin PL1 that acts as a bridge between the master device 10 and the graphics engine GE. The plugin PL1 uses a library or protocol (e.g., Socket.IO) to incorporate communication and open a communication port (COM port) that serves as the interface towards the communication module 12a of the master device 10, facilitating data exchange between two ports with a single PCB. The first software plugin PL1 also enables streaming of the output of the 2D prototyping tool to the graphics engine GE in the form of a dynamic image, which can be applied to a 3D model. This way, the real-time output from the 2D prototyping tool PT is also visible in a VR/AR headset HS coupled to the computer 40. For example, a UI designed in the 2D prototyping tool PT is visible on a 3D virtual screen in the graphics engine GE. The 2D HMI prototyping tool PT communicates with the master device 10 via a second software plugin PL2 that acts as a bridge between the master device 10 and the 2D HMI prototyping tool PT. The plugin PL2 uses a library or protocol (e.g., Socket.IO) to incorporate communication (i.e., send and receive messages between the prototyping tool PT and the master device 10) and open a COM port that serves as the interface towards the second communication module 12b of the master device 10. Therefore, the master device 10 facilitates instant usability upon connection to computer 40 via serial communication ports (e.g., USB), providing a seamless and convenient plug-and-play user experience. Furthermore, the computer 40 is connected to a VR/AR headset HS (or head-mounted display) that receives the graphic information from the graphics engine GE and/or from the 2D HMI prototyping tool PT to reproduce, on the display of the headset HS, the 3D model of the vehicle's interior and the appearance of a 2D HMI screen of the vehicle's interior merged together.

Therefore, in brief, while the communication ports between the master device 10 and the computer 40 are open, messages between the two design tools (i.e., the 3D engine and the 2D tool) are transmitted, enabling them to communicate with each other. The implementation of wireless (e.g., Bluetooth) modules in the master and slave devices allows each slave device to send and receive messages from the master, which then sends and receives messages to and from the gaming engine GE and 2D prototyping tool PT. Therefore, efficient data exchange and synchronization between software and hardware components is facilitated. Depending on the needs of the application or project, the number of slave devices 20 in the system 1 may vary, and so may vary the number of Bluetooth modules 14 coupled to the master device 10. For instance, if multiple slave devices are in use, a corresponding number of Bluetooth modules will be coupled to the master device to ensure communication efficiency. Slave devices may not directly communicate with each other, but, if necessary, they can exchange messages through the master device, which acts as an intermediary.

Additionally, each slave device 20 is connected to corresponding hardware, based on the requirements of the application or project. For example, one slave device may manage an LED strip (as exemplified in Figure 2), while another slave device may operate several buttons (as exemplified in Figure 3). The LED strip can be controlled from the master device, offering versatile functionality such as power management (on/off), color selection, and animation control. The LED strip can thus be controlled not only via signals coming from the hardware components (like buttons), but also via data coming from the 2D HMI prototype incorporated in the VR/AR/XR environment and operated by the user wearing the headset HS, or data coming from interactions of the user with the 3D environment. The provision of both sensors (e.g., buttons, knobs) and actuators (e.g., LED strip) coupled to the slave devices 20 thus enables interactive control over various parameters of the virtual model of the car's interior. For instance, during the verification phase, the brightness of the LED strip can be adjusted by the user either acting on a physical knob, or by acting on a virtual slider reproduced on a virtual screen by the headset HS. Similarly, the effect of such a change can be reflected both in the real environment (by actually adjusting the brightness of the LED strip) and in the AR/VR/XR environment, providing real-time feedback within the 2D prototype.

The inclusion of physical controls thus expands the range of control possibilities, allowing for precise adjustments and intuitive interaction with both physical and digital elements. The provision of a master device 10 that communicates with slave devices 20 as well as computer 40 allows to accept user input from various sources, including virtual reality environments, 2D prototypes, and direct hardware interactions. This diverse input ecosystem enables the user to interact with the prototyping system 1 in multiple ways, offering flexibility and versatility in the prototyping process.

Another example of the functionality of the prototyping system described herein is support for voice control. For instance, one of the slave devices 20 may be coupled to a microphone for capturing the user's voice. The voice input may be activated by the user by pressing a button (be it a physical one or a virtual one). Upon activation of the voice input function, the system 1 processes the voice commands within the target environment, whether it be a virtual reality simulation or a 2D prototype.

Obviously, the construction details and the embodiments may widely vary with respect to what has been described and illustrated by way of example, without departing from the scope of protection of the present invention as defined in the claims that follow.

## Claims

1. A system (1) for the interactive prototyping of products, comprising:
- a computer (40) configured to run a 2D design software program (PT) for designing a bi-dimensional screen interface that is intended to be incorporated into a product, run a 3D graphics engine (GE) for producing a three-dimensional model of the product, and incorporate said bi-dimensional screen interface into said three-dimensional model of the product to produce a virtual representation of the product;
- a virtual reality or augmented reality headset (HS) coupled to said computer (40) and wearable by a user, the headset (HS) being configured to display said virtual representation of the product;
- a master device (10) coupled to said computer (40) via one or more serial communication interfaces (12a, 12b) to exchange data between said 2D design software program (PT), said 3D graphics engine (GE) and said master device (10) via a software plugin (PL1, PL2) run by said computer (40), the master device (10) further comprising a first wireless communication interface (14);
- at least one slave device (20) comprising a second wireless communication interface (24) for exchanging data with said first wireless communication interface (14), the at least one slave device (20) further comprising at least one actuator device (25) and/or at least one sensor device (27, 28, 29);
wherein actuation data is transmitted from said 2D design software program (PT) and/or said 3D graphics engine (GE) to said at least one actuator device (25) via said master device (10);
and wherein control data is transmitted from said at least one sensor device (27, 28, 29) to said 2D design software program (PT) and/or said 3D graphics engine (GE) via said master device (10).

2. The prototyping system (1) of claim 1, wherein said one or more serial communication interfaces (12a, 12b) comprise one or more USB modules.

3. The prototyping system (1) of claim 1 or claim 2, wherein said one or more serial communication interfaces (12a, 12b) comprise:
a first serial communication interface (12a) configured to open a first communication port with said computer (40) to exchange data with said 3D graphics engine (GE); and
a second serial communication interface (12b) configured to open a second communication port with said computer (40) to exchange data with said 2D design software program (PT).

4. The prototyping system (1) of any of the previous claims, wherein said first (14) and second (24) wireless communication interfaces comprise a Bluetooth module.

5. The prototyping system (1) of any of the previous claims, wherein said at least one actuator device (25) includes at least one of a lighting module, preferably an LED strip (25), and a speaker.

6. The prototyping system (1) of any of the previous claims, wherein said at least one sensor device (27, 28, 29) includes at least one of a button, a switch, a knob, a lever, a microphone.

7. The prototyping system (1) of any of the previous claims, wherein said at least one slave device (20) comprises a local power supply source (26) configured to supply said at least one actuator device (25) and/or at least one sensor device (27, 28, 29).

8. The prototyping system (1) of any of the previous claims, wherein the master device (10) comprises a status LED (15), preferably an RGB status LED, configured to provide visual feedback on the current status of the system (1).

9. A method of operating a system (1) according to any of the previous claims, the method comprising:
- designing, with said 2D design software program (PT) run by said computer (40), a bi-dimensional screen interface that is intended to be incorporated into a product;
- producing, with said 3D graphics engine (GE) run by the computer (40), a three-dimensional model of the product;
- incorporating said bi-dimensional screen interface into said three-dimensional model of the product to produce a virtual representation of the product;
- displaying said virtual representation of the product on said virtual reality or augmented reality headset (HS) coupled to said computer (40) and wearable by a user;
- coupling said computer (40) to said master device (10) via one or more serial communication interfaces (12a, 12b) to exchange data between said 2D design software program (PT), said 3D graphics engine (GE) and said master device (10) via a software plugin (PL1, PL2) run by said computer (40);
- exchanging data between said master device (10) and said at least one slave device (20) via said first wireless communication interface (14) and said second wireless communication interface (24);
- transmitting actuation data from said 2D design software program (PT) and/or said 3D graphics engine (GE) to said at least one actuator device (25) via said master device (10); and
- transmitting control data from said at least one sensor device (27, 28, 29) to said 2D design software program (PT) and/or said 3D graphics engine (GE) via said master device (10).

10. A computer program product, loadable in the memory of at least one processing unit and including software code portions which, when executed by the processing unit, cause the processing unit to carry out the steps of the method of claim 9.
